# EUROPÄISCHE PATENTSCHRIFT

(11) **EP 0 911 711 B1**
(45) Veröffentlichungstag und Bekanntmachung des Hinweises auf die Patenterteilung: **07.08.2002**
(21) Anmeldenummer: 98119353.5
(22) Anmeldetag: 14.10.1998
(51) Int. Cl.: G05B 19/19, H02P 8/42

(54) **Regelverfahren zur Drehlagenhaltung eines Elektromotors**
Regulation method for stopping an electric motor at an angular position
Méthode de régulation pour l'arrêt d'un moteur électrique sur une position angulaire

(30) Priorität: 24.10.1997 DE 19747169
(43) Veröffentlichungstag der Anmeldung: 28.04.1999
(73) Patentinhaber: ROBERT BOSCH GMBH, 70442 Stuttgart (DE)
(72) Erfinder: Mack, Rolf, 76547 Sinsheim (DE)

(56) Entgegenhaltungen:
- EP-A- 0 066 159
- EP-A- 0 216 733
- EP-A- 0 584 772
- DE-A- 4 316 292
- US-A- 5 446 357
- SCHOLLER K: "STILLSTAND AN JEDER STELLE NEUES REGELSYSTEM SENKT DEN AUFWAND" ELEKTROTECHNIK,DE,VOGEL VERLAG K.G. WURZBURG, Bd. 76, Nr. 9, 27. September 1994 (1994-09-27), Seiten 42-43, XP000468254 ISSN: 1431-9578

## Beschreibung

### Stand der Technik

Die Erfindung bezieht sich auf ein Regelverfahren zur Drehlagenhaltung eines Elektromotors, bei dem eine Sollposition des Rotors mittels einer Regeleinheit aufrechterhalten wird.

Die Drehlage eines Gleichstrom-Elektromotors wird mittels einer Regeleinheit verwirklicht, die den Rotor in die Sollposition zurückführt, wenn eine Abweichung von der Sollposition festgestellt wird. Solange die Sollposition eingehalten wird, bleibt der Motor stromlos, hingegen wird dem Motor Energie zugeführt, wenn eine Abweichung von der Sollposition erkannt worden ist und der Rotor zurückgeführt wird. Wirkt auf den Rotor eine entsprechend große Gegenkraft, wie z. B. bei einem Kupplungssteller einer halbautomatischen oder vollautomatischen Kupplung, so sind relativ häufige Regelvorgänge erforderlich, und es tritt eine thermische Erwärmung auf, die zur Beschädigung oder Zerstörung des Motors führen kann. Um zu häufige Regelvorgänge zu vermeiden, wird bisher die Selbsthemmung von Gleichstrom-Elektromotoren durch Änderung der Getriebestufe oder durch Vergrößerung der Nutbreite des Lamellenpakets erhöht. Während die erstgenannte Maßnahme zu einem verringerten Wirkungsgrad wegen höherer Reibung führt, ergeben sich bei der zweiten Maßnahme eine gröbere magnetische Rasterung und erhöhte Laufgeräusche.

Der Erfindung liegt die Aufgabe zugrunde, ein Regelverfahren der eingangs genannten Art anzugeben, mit dem die Selbsthemmung mit einfachem, kostengünstigen Maßnahmen erzielt wird, wobei die vorteilhaften Eigenschaften des Motors und Getriebes hinsichtlich des Wirkungsgrades und des Laufverhaltens erhalten bleiben.

Diese Aufgabe wird mit den Merkmalen des Anspruchs 1 gelöst.

Hiernach ist also vorgesehen, daß bei Ausrücken des Rotors aus der anfänglichen Sollposition durch eine Gegenkraft eine um einen vorgegebenen oder vorgebbaren Betrag in eine erste Richtung geänderte Sollposition eingestellt wird, daß nach jedem Ausrücken des Rotors aus der Sollposition eine jeweils neue, in der ersten Richtung geänderte Sollposition eingestellt wird, bis eine vorgegebene Anzahl n von Sollpositionsänderungen erreicht wird, daß nach Erreichen der n-ten Sollpositionsänderung eine (n+1)-te Sollposition angefahren wird, die bezüglich der ersten Richtung auf der entgegengesetzten Seite der anfänglichen Sollposition liegt.

Durch die Änderung der Sollposition in der genannten Weise wird von der ursprünglichen, gewünschten Sollposition zwar geringfügig abgewichen, letztendlich jedoch eine Verstellung in Richtung eines erhöhten Rastmoments erreicht, in der der Motor eine genügende Selbsthemmung besitzt, um die neue Sollposition trotz der entgegenwirkenden Kraft einzuhalten.

Mit den Maßnahmen, daß die (n + 1)-te Sollposition um einen der n-ten Sollposition entsprechenden Betrag von der anfänglichen Sollposition auf der entgegengesetzten Seite beabstandet liegt und daß bei einem weiteren Ausrücken aus der Sollposition bis zu n weitere Sollpositionsänderungen in der ersten Richtung solange erfolgen, bis eine stabile Sollposition erreicht ist, wird eine Suche nach der genügend großen Selbsthemmung in beiden Richtungen von der ursprünglichen Sollposition erreicht, wobei durch den Betrag der Sollpositionsänderung und die Anzahl der Schritte die Feinheit des Verfahrens sowie eine maximale Abweichung von der ursprünglichen Sollage bestimmt werden kann.

Ist vorgesehen, daß der Betrag der Sollpositionsänderungen größer ist als die Regelgenauigkeit und kleiner ist als die magnetische Rasterung und kein ganzzahliges Teilverhältnis mit der magnetischen Rasterung bildet und daß die Sollpositionsänderung jeweils nach Erreichen von n weiteren Änderungen auf die entgegengesetzte Seite der anfänglichen Sollposition bezüglich der vorangegangenen Richtung geändert wird, so wird bei den verschiedenen Wiederholungen der n Änderungen jeweils in einem anderen Abstand von der ursprünglichen, anfänglichen Sollposition begonnen, und insgesamt (mit einer Art Noniuseffekt) eine verfeinerte Schrittweite beim Anfahren der endgültigen Sollposition mit ausreichender Selbsthemmung erreicht.

Ein geeigneter Bereich für den Betrag der Sollpositionsänderung liegt zwischen 1/20 bis 1/4 der magnetischen Rasterung, wobei die magnetische Rasterung mit einer Nutbreite zwischen den Lamellen und dem davon abhängigen Magnetfluß zusammenhängt.

Das Regelverfahren kann vorteilhaft bei einem Stellermotor für eine halbautomatische oder vollautomatische Kupplung angewandt werden.

Die Erfindung wird nachfolgend anhand eines Ausführungsbeispiels unter Bezugnahme auf die Zeichnungen näher erläutert. Es zeigen:
- Fig. 1: eine schematische Darstellung eines Elektromotors,
- Fig. 2: eine Darstellung der Rastmomente in Abhängigkeit von unterschiedlichen Drehlagen des Rotors,
- Fig. 3: eine Blockdarstellung der wesentlichen Teile einer Motorsteuerschaltung,
- Fig. 4: einen Ablaufplan zu dem Regelverfahren und
- Fig. 5: eine schematische Darstellung zu dem Sollwert- und Istwert-Verlauf bei dem Regelverfahren.

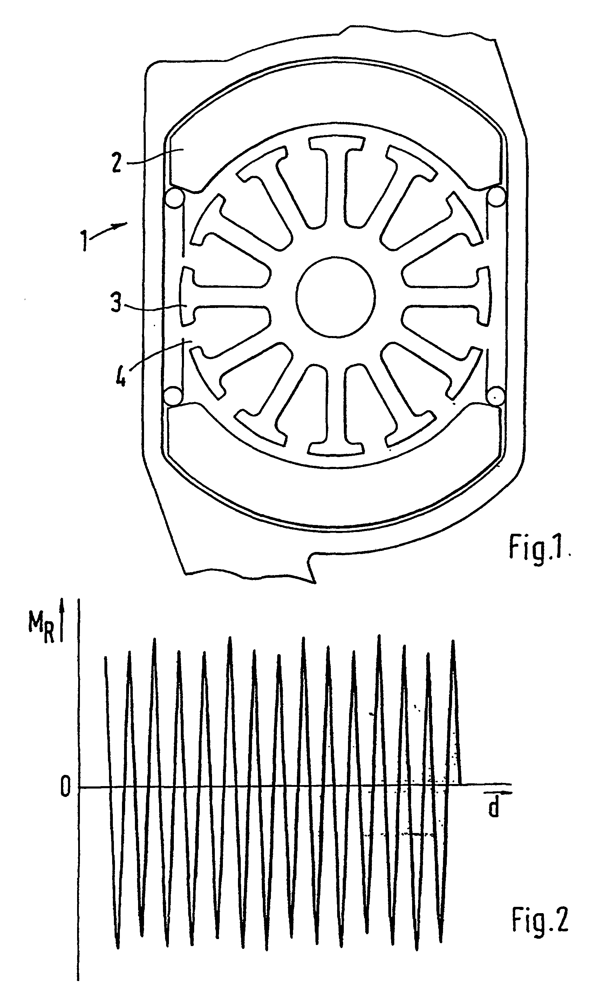

In Fig. 1 ist schematisch ein Gleichstrom-Elektromotor 1 gezeigt, wobei die Drehlage eines Rotors bezüglich zweier Magnete 2 ersichtlich ist. Bei der in der Figur gezeigten Drehlage sind Lamellen 3 mit einer dazwischenliegenden Nut 4 bezüglich der Magnete 2 so angeordnet, daß ein maximales Rastmoment M_{R} vorliegt. In Fig. 2 ist das Rastmoment M_{R} in Abhängigkeit eines Abstandes d von einer Bezugs-Drehlage dargestellt. Die Nutbreite beträgt beispielsweise 3 mm. Die Maxima der Rastmomente M_{R} können geringfügig voneinander abweichen, wie aus Fig. 2 ebenfalls hervorgeht. Je nach Drehlage ändert sich das Rastmoment M_{R} und kann im ungünstigsten Fall Null betragen, während das maximale Rastmoment M_{R} z. B. nahezu 6 Ncm beträgt.

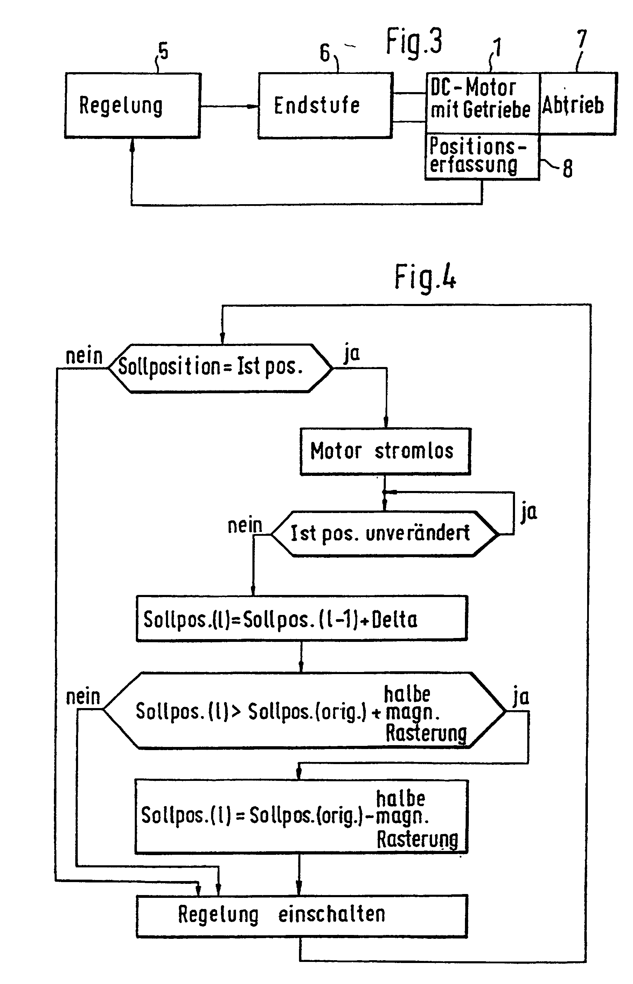

In Fig. 3 ist eine Ansteuerschaltung mit dem Elektromotor 1 dargestellt. Ein Istwert IW der Drehlage wird mit einer Positionserfassungseinheit 8 festgestellt und einer Regeleinheit 5 zugeführt, die Steuersignale an eine den Motor 1 ansteuernden Endstufe 6 abgibt. Der Motor 1 mit einem Getriebe erzeugt einen Abtrieb 7, um einen bestimmten Sollwert SW bzw. Sollposition entsprechend einer Drehlage des Elektromotors einzustellen, wie es beispielsweise bei einem Stellermotor für eine halbautomatische oder vollautomatische Kupplung erforderlich ist. Da die Sollposition möglichst genau und zuverlässig eingehalten werden soll, wird diese bei Abweichung von der vorgegebenen oder vorgebbaren Sollposition stets nachgeführt. Bei einer Kupplung muß durch Regelung der Drehlage des Rotors z.B. eine Genauigkeit des Abstandes der Kupplungsscheiben von 20 µm erzielt werden.

Wirkt auf den Motor eine Gegenkraft und befindet sich die eingeregelte Sollposition nicht im Bereich des maximalen Rastmoments M_{R}, sondern wesentlich niedriger, so kann der Rotor durch die Gegenkraft immer wieder aus der Sollposition herausgedrückt werden, in der er stromlos geschaltet ist, so daß der Elektromotor 1 durch Einschalten der Regelung wieder in die Sollposition gebracht werden muß. Durch die wiederholten Regelungsvorgänge kann es vorkommen, daß dem Motor soviel Energie zugeführt wird,'daß er sich zu stark aufheizt und thermisch geschädigt wird. Beim Herausdrücken des Rotors aus der Sollposition wird durch die Dynamik in der Regel auch das maximale Drehmoment M_{R} durchfahren, so daß die Regelungsvorgänge relativ aufwendig sind und viel Energie verbrauchen.

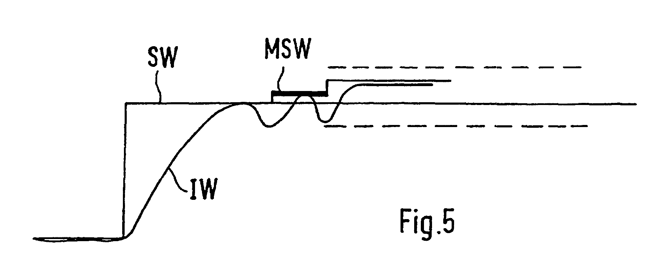

Mit dem in Fig. 4 gezeigten Regelverfahren wird der thermischen Überlastung vorgebeugt, indem eine Sollposition mit einem so hohen Drehmoment M_{R} gesucht wird, daß die Sollposition auch bei erhöhter Gegenkraft aufrechterhalten bleibt. Im ersten Schritt wird festgestellt, ob die lstposition der Sollposition entspricht. Falls dies nicht der Fall ist, wird die Regelung eingeschaltet und die Sollposition angefahren und bei erreichter Sollposition der Motor stromlos geschaltet. Ändert sich die lstposition durch eine Gegenkraft, so wird eine um einen Betrag Delta geringfügig in einer ersten Richtung geänderte Sollposition hergestellt. Falls diese Sollposition r kleiner oder gleich der anfänglichen, originalen Sollposition plus der halben magnetischen Rasterung ist, wird die Regelung eingeschaltet und diese neue Sollposition angefahren und der Motor stromlos geschaltet. Wird die Istposition infolge Gegenkraft wieder geändert, so wird die Sollposition in der ersten Richtung wiederum um einen Betrag Delta gegenüber der vorhergehenden Sollposition geändert und die Istposition mit der neuen Sollposition durch Einschaltung der Regelung zur Deckung gebracht. Jedes Mal wenn der Rotor aus der Sollposition ausrückt wird auf diese Weise eine neue Sollposition eingestellt und der Rotor darauf eingeregelt. Erreicht die neue Sollposition einen Abstand von der anfänglichen Sollposition, der größer ist als die halbe magnetische Rasterung, so wird eine neue Sollposition in der entgegengesetzten Richtung von der anfänglichen Sollposition vorgegeben, die der anfänglichen Sollposition minus der halben magnetischen Rasterung entspricht. Von dieser neuen Sollposition ausgehend wiederholen sich die Einregelungen der Istposition auf die jeweils neu vorgegebene Sollposition in der ersten Richtung, bis eine stabile Istposition erreicht ist, in der die Selbsthemmung des Motors die Gegenkraft übertrifft und die Istposition beibehalten wird.

In Fig. 5 sind diese Vorgänge anhand des Sollwert-Verlaufs SW und des Istwert-Verlaufs IW wiedergegeben. Zunächst wird der Istwert IW durch die Regelung an den Sollwert SW herangeführt. Sobald der Istwert IW einen bestimmten Betrag von dem Sollwert SW abweicht, wird ein neuer, manipulierter Sollwert MSW vorgegeben, an den der Istwert IW mittels der Regelung herangeführt wird. Bei abermaligem Abweichen des Istwertes IW von dem neuen, manipulierten Sollwert MSW wird der Sollwert wiederum in der ersten Richtung geändert und der Istwert IW an diesen herangeführt, wie vorstehend beschrieben, bis eine stabile Istposition erreicht ist.

Die maximale Selbsthemmung ergibt sich dann, wenn die Istposition mit dem maximalen Rastmoment M_{R} zusammenfällt. Bei einer relativ groben Änderung der Sollposition kann es vorkommen, daß das maximale Rastmoment M_{R} übersprungen wird. Zur Verfeinerung des Verfahrens ist daher vorteilhafterweise vorgesehen, daß das Verhältnis der magnetischen Rasterung, d.h. dem Abstand zwischen den Maxima der Rastmomente M_{R}, zu dem Betrag Delta der Sollpositionsänderung keine ganze Zahl ergibt. Bei wiederholter Anwendung des vorstehend beschriebenen Regelverfahrens ergibt sich damit bei einem jeweiligen Wechsel auf die andere Seite der anfänglichen Sollposition nach n Änderungen stets eine neue Sollposition gemäß einem Noniuseffekt, wodurch eine verfeinerte Unterteilung der Sollpositionsänderungen erzielt wird. Auf diese Weise kann das maximale Rastmoment relativ genau getroffen werden, so daß die Selbsthemmung ein Maximum erreicht.

Mit den beschriebenen Maßnahmen kann mit relativ wenig Energieaufwand eine Sollposition trotz Einwirken der Gegenkraft eingehalten werden. Ein vorhandener Motor und ein Getriebe können beibehalten werden, wobei eine maximale Selbsthemmung erzielt wird. Das Regelverfahren kann mit einfachen Maßnahmen z. B. durch entsprechende Programmierung eines Mikrocontrollers verwirklicht werden. Es hat sich gezeigt, daß sich die relativ geringfügige Änderung der Sollposition praktisch auf das zu verstellende Teil und dessen Funktion nicht auswirkt.

## Patentansprüche

1. Regelverfahren zur Drehlagenhaltung eines Elektromotors, bei dem eine Sollposition des Rotors mittels einer Regeleinheit aufrechterhalten wird, **gekennzeichnet durch** die Schritte,
**daß** bei Ausrücken des Rotors aus der anfänglichen Sollposition **durch** eine Gegenkraft eine um einen vorgegebenen oder vorgebbaren Betrag in eine erste Richtung geänderte Sollposition eingestellt wird,
**daß** nach jedem Ausrücken des Rotors aus der Sollposition eine jeweils neue, in der ersten Richtung geänderte Sollposition eingestellt wird, bis eine vorgegebene Anzahl n von Sollpositionsänderungen erreicht wird,
**daß** nach Erreichen der n-ten Sollpositionsänderung eine (n+1)-te Sollposition angefahren wird, die bezüglich der ersten Richtung auf der entgegengesetzten Seite der anfänglichen Sollposition liegt.

2. Regelverfahren nach Anspruch 1,
**dadurch gekennzeichnet,**
**daß** die (n+1)-te Sollposition um einen der n-ten Sollposition entsprechenden Betrag von der anfänglichen Sollposition auf der entgegengesetzten Seite beabstandet liegt und
**daß** bei einem weiteren Ausrücken aus der Sollposition bis zu n weitere Sollpositionsänderungen in der ersten Richtung solange erfolgen, bis eine stabile Sollposition erreicht ist.

3. Regelverfahren nach Anspruch 1 oder 2,
**dadurch gekennzeichnet,**
**daß** der Betrag der Sollpositionsänderungen größer ist als die Regelgenauigkeit und kleiner ist als die magnetische Rasterung und kein ganzzahliges Teilverhältnis mit der magnetischen Rasterung bildet und
**daß** die Sollpositionsänderung jeweils nach Erreichen von n weiteren Änderungen auf die entgegengestzte Seite der anfänglichen Sollposition bezüglich der vorangegangenen Richtung geändert wird.

4. Regelverfahren nach einem der vorhergehenden Ansprüche,
**dadurch gekennzeichnet,**
**daß** der Betrag der Sollpositionsänderung 1/20 bis 1/4 der magnetischen Rasterung beträgt.

5. Anwendung des Regelverfahrens nach einem der vorhergehenden Ansprüche bei einem Stellermotor für eine halbautomatische oder vollautomatische Kupplung.

## Claims

1. Control method for stopping an electric motor at a specific rotation position, in which a nominal position of the rotor is maintained by means of a control unit,
**characterized by** the following steps:
if the rotor is moved away from the initial nominal position by an opposing force, a nominal position is set which is changed by a predetermined amount, or an amount which can be predetermined, in a first direction,
following each occasion on which the rotor is moved away from the nominal position, a nominal position is set which is in each case new and is changed in the first direction until a predetermined number n of nominal position changes is reached, and
after reaching the n-th nominal position change, the rotor moves to an (n + 1)-th nominal position which is on the opposite side, with respect to the first direction, of the initial nominal position.

2. Control method according to Claim 1,
**characterized**
**in that** the (n + 1)-th nominal position is located at a distance, which corresponds to the n-th nominal position, away from the initial nominal position, on the opposite side, and
**in that**, if the rotor is moved further away from the nominal position, up to n further nominal position changes are carried out in the first direction, until a stable nominal position is reached.

3. Control method according to Claim 1 or 2,
**characterized**
**in that** the magnitude of the nominal position changes is greater than the control accuracy and is less than the magnetic cogging, and does not form an integer division ratio with the magnetic cogging, and
**in that** the nominal position change is in each case changed to the opposite side of the initial nominal position with respect to the previous direction, after reaching n further changes.

4. Control method according to one of the preceding claims,
**characterized**
**in that** the magnitude of the nominal position change is 1/20 to 1/4 of the magnetic cogging.

5. Use of the control method according to one of the preceding claims for an actuator motor for a semi-automatic or fully automatic clutch or coupling.

## Revendications

1. Procédé de régulation pour maintenir la position d'un air d'un moteur électrique, selon lequel on maintient la position de consigne du rotor à l'aide d'une unité de régulation,
**caractérisé en ce que**
lorsque le rotor est sorti de sa position de consigne initiale par une force antagoniste, on le règle dans une position de consigne modifiée d'une amplitude prédéterminée ou susceptible de l'être, dans une première direction, après chaque sortie du rotor de la position de consigne, on règle une nouvelle position de consigne modifiée dans la première direction jusqu'à atteindre un nombre prédéterminé n de variations de positions de consigne, de sorte qu'après avoir atteint la n^{ième} variation de position de consigne, on passe dans une (n+1) position de consigne qui se situe par rapport à la première direction, du côté opposé à la position de consigne initiale.

2. Procédé de régulation selon la revendication 1,
**caractérisé en ce que**
la (n+1) position de consigne est écartée d'une amplitude correspondant à la n^{ième} position de consigne par rapport à la position de consigne initiale, du côté opposé, et en cas de nouvelle sortie de la position de consigne on effectue jusqu'à n autres variations de position de consigne dans la première direction, jusqu'à atteindre une position de consigne stable.

3. Procédé de régulation selon les revendications 1 ou 2,
**caractérisé en ce que**
l'amplitude des variations de position de consigne est supérieure à la précision de régulation et inférieure à la trame magnétique, et ne présente pas de rapport de division entier avec la trame magnétique, et
la variation de position de consigne, chaque fois après avoir atteint n autres variations, est modifiée du côté opposé de la position de consigne initiale par rapport à la direction précédente.

4. Procédé de régulation selon l'une des revendications précédentes,
**caractérisé en ce que**
l'amplitude de la variation de la position de consigne représente 1/20^{ème} jusqu'à 1/4 de la trame magnétique.

5. Application du procédé de régulation selon l'une des revendications précédentes à un actionneur d'un embrayage semi-automatique ou totalement automatique.
